# EUROPEAN PATENT APPLICATION

(11) **EP 4 563 120 A1**
(43) Date of publication of application: **04.06.2025**
(21) Application number: 23213505.3
(22) Date of filing: 30.11.2023
(51) Int. Cl.: A61C 17/34

(54) **DRIVE TRAIN ASSEMBLY FOR AN ELECTRIC TOOTHBRUSH AND MANUFACTURING METHOD**

(71) Applicant: Koninklijke Philips N.V., 5656 AG Eindhoven (NL)
(72) Inventor: SOLERIO, Daniele, Eindhoven (NL); HOFSTEE, Jaap, Eindhoven (NL); LIU, Mitchell Jonathan Kie-Sang, Eindhoven (NL); ROELOFSEN, Paul Henricus, Eindhoven (NL); VAN VLIET, Jasper Florian, Eindhoven (NL)
(74) Representative: Philips Intellectual Property & Standards

(57) **Abstract**

The invention concerns a drive train assembly for an electric toothbrush, comprising a shaft comprising a rear side and a front side, wherein the front side of the shaft is configured for receiving a brush head. The drive train assembly further comprises a drive train comprising a shaft interface configured to receive the shaft, wherein the shaft interface comprises a rear surface and a front surface, wherein the rear side of the shaft is connected with the shaft interface from the direction of the front surface of the shaft interface for connecting with the drive train, a connecting element configured for connecting the shaft with the shaft interface, wherein the connecting element extends at least partially along the outer surface at the rear side of the shaft for connecting the shaft interface and the shaft at the rear side of the shaft. The invention further concerns a toothbrush comprising the drive train assembly and a manufacturing method for manufacturing the shaft and shaft interface assembly.

## Description

### FIELD OF THE INVENTION

The present invention relates to the field of oral care devices. In particular, the present invention relates to the field of power toothbrushes and their drive train assembly and to a method of manufacturing such a drive train assembly.

### BACKGROUND OF THE INVENTION

An electrical driven toothbrush comprises different components, wherein some of these components have to move. For example, inside the housing, to which a toothbrush head can be assembled via the shaft, actuators move components such that a brush head of the toothbrush is movable. These moving components are subjected to various forces and are subject to fatigue. In particular, the connections of the mechanical components to each other are susceptible to joint failure. The robustness of the toothbrush must be granted in extreme conditions. Especially the moving components, such as the shaft which connects a head of the toothbrush with a body of the toothbrush must remain connected to the body of the toothbrush during usage.

### SUMMARY OF THE INVENTION

There may therefore be a need for an improved drive train assembly of a toothbrush, wherein the components of the drive train assembly remain connected for providing the function of toothbrush.

An object of the invention is to provide an improved drive drain assembly, in particular an improved connection of the shaft to the drive train for maintaining a secure connection, such that a disconnection due to fatigue could be prevented. The problem, which may be overcome is a loss of the primary function and that users cannot use the device anymore.

The object of the present invention is solved by the subject matter of the independent claims where further embodiments are incorporated in the dependent claims.

According to a first aspect of the invention, a drive train assembly is described. The drive train assembly comprises a shaft comprising a rear side and a front side, wherein the front side of the shaft is configured for receiving a brush head. The assembly further comprises a drive train comprising a shaft interface configured to receive the shaft, wherein the shaft interface comprises a rear surface and a front surface. The rear side of the shaft is connected with the shaft interface from the direction of the front surface of the shaft interface for connecting with the drive train. Further, the assembly comprises a connecting element configured for connecting the shaft with the shaft interface, wherein the connecting element extends at least partially along the outer surface at the rear side of the shaft for connecting the shaft interface and the shaft at the rear side of the shaft.

The drive train assembly may additionally comprise an actuator configured to move the shaft. For instance, an electrical motor may be used as the actuator, which can generate and/or transfer the power to the shaft. The actuator of the drive train may be further connected to a brush head which may be coupled to the shaft via the shaft interface. The actuator may be configured to apply a torque to the shaft for generating a movement of the shaft.

The shaft may comprise any shape, such as a circular shape, a rectangular, and a hexagonal shape, wherein the shaft shape is not limited to this. For instance at least the rear side of the shaft may comprise a different shape than the remaining portion of the shaft.

In the present invention, the term "shaft interface" shall be understood to describe an interface for the shaft which is configured to receive the shaft. In particular the shaft interface may be configured and may serve for connecting the shaft with the drive train assembly. For example, the shaft interface may be a so called front bracket configured to receive the shaft and to connect the shaft with the drive train components. The shaft interface allows a secure connection of the shaft to the other components of the drive train.

In the present invention, the term "connecting element" shall be understood to describe any element which is able to connect two mechanical elements, such as the shaft and the shaft interface for forming a secure connection which can withstand the force/torque applied to the shaft and which would not easily break. The connecting element may be a materially bonded connecting element, which connects the shaft and the shaft interface by an additional material or by the respective manufacturing process. For example, material of the connecting element may be adapted to the materials of the shaft and the shaft interface such that a good connection can be provided. On the other hand, the connecting element may be formed during the manufacturing process, i.e. welding, wherein for example a laser may liquefy the material at the area of the connecting element for generating a connection and after cooling down the parts become one, are connected with each other. The connecting elements extends partially along the outer surface of the shaft. For example, if the shaft comprises a round shape at its rear side, the connecting element may follow the shape of the shaft. Hence, the connecting element extends along the circular circumference of the shaft. It should be noted that the connecting element is not just a simple point, or dot connection. In particular, the connecting element extends along a part of the outer surface of the shaft, for example at least along a half of the outer surface of the shaft, wherein the extension length is not limited to this example.

According to an exemplary embodiment of the invention, the connecting element may extend along the entire outer surface of the shaft at the rear side of the shaft and may connect the outer surface of the shaft with the shaft interface. Accordingly, the connecting element is arranged such that it surrounds the complete outer surface of the shaft at an area which connects the shaft with the shaft interface. For example, when the shaft rear side comprises a circular shape, the connecting element extends along the complete circumferential outer surface of the shaft. This allows a sufficient connection between the shaft and the shaft interface, which prevents fatigue breakage and can withstand the force/torque applied the shaft while driving the shaft via the drive train. Hence, the improved drive train assembly can remain the primary function of connection between the drive trains components, and hence the toothbrush components. The extending along the complete outer surface of the shaft allows in comparison to one or two point connection (between shaft and shaft interface), that the connection between the components last longer and cannot easily be disconnected.

According to an exemplary embodiment of the invention, the connecting element may be configured to connect a first portion of the rear side of the shaft and the rear surface of the shaft interface. The rear side of the shafts extends through the shaft interface, wherein the first portion of the rear side may be arranged near an end of the shaft, in particular near or at the end surface of the rear side of the shaft. For example, the first portion is an area wherein the rear end side of the shaft and the outer surface of the shaft abut at each other. In particular, the first portion is arranged at an edge wherein the rear end surface of the shaft and the outer surface of the shaft are connected. Further, the first portion may be arranged spaced apart from the rear and surface of the shaft depending on how far the shaft extends outward of the shaft interface. In other words, the position of the first portion of the rear side of the shaft may be located at an area at which a plane parallel to the rear surface of shaft interface crosses the outer surface of the shaft. According to this the position of the connecting element can be adapted to an insertion length of the shaft, wherein the connection element when arranged at the first portion may provide a connection of the rear surface of the shaft interface with the rear side of the shaft.

According to an exemplary embodiment of the invention, the drive train assembly may further comprise a further connecting element configured to connect a second portion of the rear side of the shaft and the front surface of the shaft interface. By providing a further, i.e. second connecting element, the connection between the shaft and the shaft interface can be further improved and may be made less probe to fatigue. The first portion and the second portion of the shaft may be spaced apart from each other. In particular the first portion of the shaft and the second portion of the shaft may be separated by the shaft interface. The second portion of the rear side of the shaft and the first portion of the rear side of the shaft may be spaced apart about a distance equally to the thickness of the shaft interface when viewed from the shaft extending direction. In particular, the second portion at the rear side of the shaft may be an area/position wherein the front surface of the shaft interface at which a plane parallel to the front surface of the shaft interface crosses the outer surface of the shaft.

According to an exemplary embodiment of the invention, the shaft may further comprise a collar extending into a direction away from a shaft center axis and extending along the outer surface of the rear side of the shaft. Additionally the collar may be in contact with the front surface of the shaft interface. The shaft center axis may be the axis along which the shaft extends between the rear side of the shaft and the front side of the shaft. In particular, the collar may be arranged at the outer surface of the shaft with a distance from the rear end surface of the shaft until the front surface of the shaft interface. Described differentially, the collar may be a protrusion of the shaft, protruding away from the shaft center axis in a direction perpendicular to the shaft center axis.

The collar may be configured to form a stop for the shaft for stopping at the shaft interface such that the collar may be arranged at the front side of the shaft interface such that it abuts the front surface of the shaft interface. The collar may allow the shaft not to be inserted too far into the shaft interface.

According to an exemplary embodiment of the invention, in particular additionally/optionally to the embodiment describing the connecting element and the further connecting element, the further connecting element may be arranged between the collar of the shaft and the front surface of the shaft interface. Accordingly, the further connecting element may serve to form a connection between the collar of the shaft and the front surface of the shaft interface. The further connecting element may allow to improve the connection via the shaft and the shaft interface by connecting the collar of the shaft with the shaft interface.

According to an exemplary embodiment of the invention, the shaft interface may comprise a through opening, wherein the rear side of the shaft is inserted into the through opening for forming a connection between the shaft and the shaft interface. The through opening may be a through hole or a cutout, through which the shaft can extend. In particular, the shape of the through opening may be adapted to the shape of the shaft, such that the shaft can be easily inserted into the through opening. The through opening may extend from the front surface of the shaft interface to the rear surface of the shaft interface. For example, when the shaft comprises the collar, the shaft may be insertable into the through opening until the collar of the shaft is arranged at the front side of the shaft interface.

According to an exemplary embodiment of the invention, wherein when the shaft may be connected with the shaft interface, a rear end surface of the shaft, which extends in a plane perpendicular to a shaft extension direction, and the rear surface of the shaft interface are arranged in a same plane. For example when additionally the collar is arranged at the shaft, the collar may serve as a stop element when the shaft is inserted through the through opening.

Additionally/optionally the connecting element may be arranged at the rear end surface of the shaft and the rear surface of the shaft interface. The connecting element provides a material bonding between the two surfaces, the rear surface of the shaft interface and the rear end surface of the shaft. This allows a good connection via the connecting element. It may be possible, depending on the material and the manufacturing method of the connecting element, that the connecting element may extend, or may be arranged, into the through opening, such that a connection may be formed between the rear surface of the shaft interface, the rear end surface of the shaft and the outer surface of the shaft.

On the other side, the rear end surface of the shaft may extend over the rear surface of the shaft interface and also over the front surface of the shaft. Further, it may be possible that the rear end surface of the shaft is arranged between the rear surface of the shaft interface and the front surface of the shaft interface. Accordingly, the rear end surface of the shaft and the rear surface of the shaft are spaced apart from each other along the shaft extension direction.

According to an exemplary embodiment of the invention, the shaft may comprise a shaft chamfer extending along the rear end surface of the shaft, wherein the connecting element may be arranged at the shaft chamfer and connects the rear surface of the shaft interface and the rear end side of the shaft. The shaft chamfer may allow an easier insertion of the shaft into the shaft interface. Further, the shaft chamfer may provide a larger area at which the connecting element could be arranged and attached to the shaft.

According to an exemplary embodiment of the invention, an inner wall of the through opening of the shaft interface may comprise a straight shape, or alternatively the inner wall of the through opening of the shaft interface may taper from the rear surface of the shaft interface to the front surface of the shaft interface such that an undercut inside the through opening is formed.

For example, when the inner wall of the trough opening may be a straight shape this means that the through opening extends straight through the shaft interface without any protrusions or recesses. For example the straight shape may be a circular cylinder, hence the through opening may be formed as a straight cylinder. Through a straight shaped through opening the shaft may be inserted easily. According to an exemplary embodiment the straight shaped through opening may be combined with the (first) connecting element and the further (second) connecting element.

On the other hand, when the through opening tapers from the front surface to the rear surface of the shaft interface, the through opening starting at the front surface of the shaft interface may be smaller than the end of the through opening at the rear surface of the shaft interface. For example, when the through opening comprises a circular shape a diameter of the through opening at the front surface of the shaft interface may be smaller than a diameter of the through opening at the rear surface of the shaft interface. This allows to provide a form fitting connection between the shaft and the shaft interface, such that only one connecting element may be necessary. Differently speaking, the tapering through opening provides a force or forces along the shaft interface connecting both parts according to a press fit criteria. This forced connection establishes a further connection in addition to the connection via the connecting element.

According to an exemplary embodiment of the invention, the shaft interface may comprise an interface chamfer extending along one side of the through opening arranged on the front surface of the shaft interface. The interface chamfer may allow an easier insertion of the shaft at the front side of the shaft interface. Further, a space for the further connecting element may be formed by the shaft interface chamfer.

According to an exemplary embodiment of the invention, the connection element and/or the further connecting element may be a welding seam applied by laser welding. In particular, when using only the connecting element, it may be only one welding seam. Further both connecting elements may be a welding seam. Or only the further connecting element may be a welding seam.

According to a second aspect of the invention, an electric toothbrush is described, comprising a drive train assembly according to any of the preceding claims, and at least a brush head connected to the drive train via the shaft of the drive train assembly. The components and embodiments as described with the drive train assembly herein, may be included into the electric toothbrush. The shaft of the drive train assembly may be connected on its front side to the brush head. Due to this connection the shaft is able to transfer the movement generated from an actuator to the brush head, such that a user is able to clean his teeth. In the toothbrush, the drive train assembly may be the component which generates the required force and/or torque for moving the brush head and start the cleaning process of the user. When using the drive train assembly as described with the embodiments herein, an improved toothbrush is provided, at which the shaft of the drive train is securely assembled to the drive train, such that the shaft is less prone to fatigue and cannot be easily disconnected from the shaft interface.

According to a third aspect of the invention, a method for manufacturing a drive train assembly for an electric toothbrush is described. The method comprises the steps of providing a shaft interface, providing a shaft, providing a through opening to the shaft interface, inserting the shaft into the through opening of the shaft interface, connecting the shaft on a rear shaft side to the shaft interface by a connecting element, wherein the connecting element extends at least partially along the outer surface of the rear shaft side for connecting the shaft interface and the rear shaft side of the shaft. The above mentioned steps need not necessarily be carried out in the order as mentioned, hence the order may differ or further steps or sub steps may be added.

The insertion step may further comprise applying of an insertion force to the shaft from a front side of the shaft for pressing the shaft into the through opening. Further the step of providing the through opening to the shaft interface may comprise a step of stamping a through opening into the shaft interface, were the shaft may be inserted.

For instance, the method may comprise further steps or different steps which allow to form a drive train assembly as described according to the different embodiments herein.

According to a further embodiment of the invention, the connecting step may comprise welding of the connecting element for connecting the rear shaft side to the shaft interface. In particular, the connecting element may be welded by laser welding. Further, the connecting element may be welded partially along the outer surface of the shaft element. In particular, the connecting element may be welded along the complete outer surface of the shaft element.

According to a further embodiment, the method may further comprise the step of connecting a further connecting element to the shaft and the shaft interface, wherein the further connecting element may be welded by laser welding. The further connecting element may also be welded partially or completely along the outer surface of the shaft. In particular, the connecting element and the further connecting element may comprise all features and may be formed and welded to the shaft as described with the embodiments described with the drive train.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

### BRIEF DESCRIPTION OF THE DRAWINGS

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig 1 illustrates a schematically toothbrush components comprising a drive train assembly according to an exemplary embodiment of the invention.
Fig. 2 illustrates a cross sectional view of a detail of the drive train assembly according to an exemplary embodiment of the invention.
Fig. 3 illustrates a view from a rear surface of a shaft interface according to an exemplary embodiment of the invention.
Fig. 4 illustrates a side view of a shaft connected to a shaft interface according to an exemplary embodiment of the invention.

### DETAILED DESCRIPTION OF EMBODIMENTS

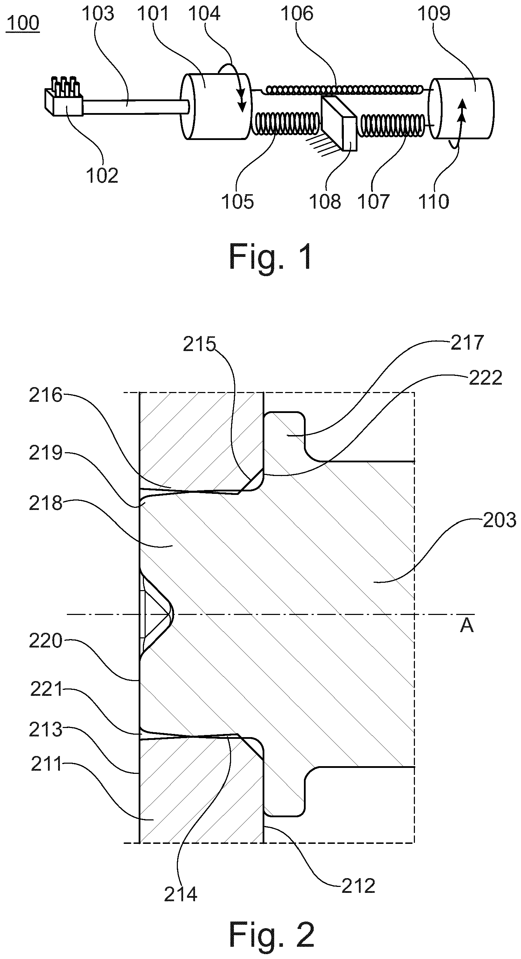

Fig 1 illustrates a schematically toothbrush components 100 comprising a drive train assembly 101 according to an exemplary embodiment of the invention. The toothbrush 100 is only illustrated partially and does not comprise all components of a complete toothbrush. The toothbrush components 100 of Fig. 1 comprise the drive train assembly 101, which comprises a shaft 103 comprising a rear side and a front side, wherein the front side of the shaft 103 is configured for receiving a brush head 102. The drive train assembly 101 comprises a shaft interface (not illustrated) configured to receive the shaft 103, wherein the shaft interface comprises a rear surface and a front surface. The rear side of the shaft 103 is connected with the shaft interface from the direction of the front surface of the shaft interface for connecting with the drive train 101. The toothbrush 100 further comprises an actuator 109 configured to move the shaft 103, when inserted into the toothbrush 100. For instance, an electrical motor may be used as the actuator 109, which can generate and/or transfer the power to the shaft 103 for moving the brush head 102. The actuator in Fig. 1 is illustrated with different parts, this is just a schematically illustration indicating an actuator using a magnet and is used for showing the connection of the different components of the toothbrush components 100, for example using a magnet and several springs 105, 106, and 107. The actuator 109 of the drive train 101 may be further connected to the brush head 102 via the shaft 103. The brush head 102 may be coupled to the shaft 103 via the shaft interface. The actuator 109 may be configured to apply a torque 104 and/or 110to the drive train components, which torque is illustrated in Fig. 1 with the arrows at 104 and 110. Furthermore, the toothbrush may comprise respective springs, a first spring 105 connecting the drive train assembly with a frame 108, a second spring 106 connecting the drive train assembly and the load inertia with the balance inertia 109, a third spring 107 coupling the balance inertia 109 to the frame 108. Hence, the actuator may be a magnetically driven actuator but may not be limited to this. It may be possible to replace these components with another actuator (not illustrated) such as a rotatable electromotor or the like.

Fig. 2 illustrates a cross sectional view of a detail of the drive train assembly 101 according to an exemplary embodiment of the invention. The drive train assembly 101 comprises a shaft interface 211 configured to receive the shaft 203, wherein the shaft interface 211 comprises a rear surface 213 and a front surface 212, wherein a rear side 218 of the shaft 203 is connected with the shaft interface 211 from the direction of the front surface 212 of the shaft interface 211 for connecting with the drive train. The connecting element 221 (not clearly visible in the illustration of Fig. 2) is configured for connecting the shaft 203 with the shaft interface 211. The connecting element 221 extends at least partially along the outer surface at the rear side 218 of the shaft 203 for connecting the shaft interface 211 and the shaft at the rear side 218 of the shaft 203. The connecting element 221 extends along the entire outer surface of the shaft 203 at the rear side of the shaft 203 and connects the outer surface of the shaft 203 with the shaft interface 211. In Fig. 2 the shaft 203 comprises a circular shape, accordingly the connecting element 221 extends along the circumferential outer surface of the shaft 203. The connecting element 221 is configured to connect a first portion of the rear side 218 of the shaft 203 and the rear surface 213 of the shaft interface 211. In particular, the connecting element 221 is arranged in this embodiment at the area wherein the rear surface 213 of the shaft interface 211 abuts the outer surface of the shaft 203. Further, a further connecting element 222 is arranged and configured to connect a second portion of the rear side 218 of the shaft 203 and the front surface 212 of the shaft interface 211. The position of the first portion of the rear side 218 of the shaft 203 may be located at an area at which a plane parallel to the rear surface 213 of shaft interface 211 crosses the outer surface of the shaft 203. In particular, the second portion at the rear side 218 of the shaft 203 may be an area/position wherein the front surface 212 of the shaft interface 211 at which a plane parallel to the front surface 212 of the shaft interface 211 crosses the outer surface of the shaft 203. The shaft 203 further comprises a collar 217 extending into a direction away from a shaft center axis A and extending along the outer surface of the rear side 218 of the shaft 203, wherein the collar 217 is in contact with the front surface 212 of the shaft interface 211. The further connecting element 222 is arranged between the collar 217 of the shaft 203 and the front surface 212 of the shaft interface 211.

Moreover, according to the embodiment illustrated in Fig. 2 the shaft interface 211 comprises a through opening 216, wherein the rear side 218 of the shaft 203 is inserted into the through opening 216 for forming a connection between the shaft 203 and the shaft interface 211. The inner wall of the through opening 216 of the shaft interface 211 tapers from the rear surface 213 of the shaft interface 211 to the front surface 212 of the shaft interface 211 such that an undercut 214 inside the through opening 216 is formed. In particular, as illustrated in Fig. 2 the through opening is a through hole 216 having a circular tapering shape. The diameter of the through opening (hole) 216 on the rear side 213 of the shaft interface 211 is larger than the diameter of the trough opening (hole) 216 at the front side 212 of the shaft inter face 211.

The shaft 203 comprises a shaft chamfer 219 extending along the rear end surface 220 of the shaft 203, which chamfer 219 eases the insertion of the shaft 203 into the shaft interface 211. The connecting element 221 is arranged at the shaft chamfer 219 and connects the rear surface 213 of the shaft interface 211 and the rear end side 220 of the shaft 203.

The shaft interface 211 comprises an interface chamfer 215 extending along the side of the through opening 216 arranged on the front surface 212 of the shaft interface 211. The chamfer 211 extends in particular along the circumference of the through hole. This chamfer 211 eases the insertion of the shaft 203 into the shaft interface 211.

Furthermore, as can be seen in Fig. 2 the rear side 218 of the shaft 203, which is inserted into the shaft interface 211 comprises a smaller diameter than the remaining portion of the shaft 203 which is not inserted into the shaft interface 211.

Further, the connection element 221 and/or the further connecting element 222 is a welding seam applied by laser welding.

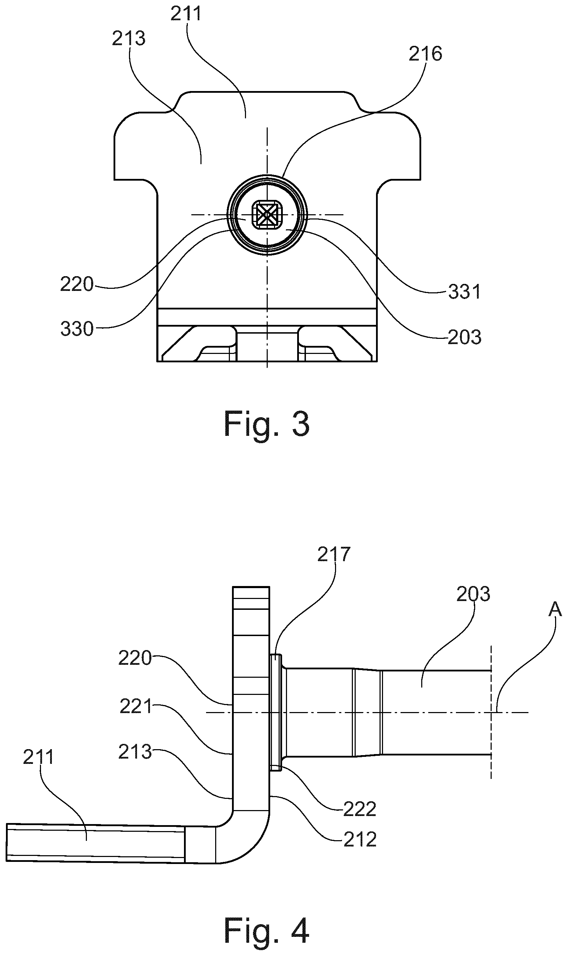

Fig. 3 illustrates a view from a rear surface 213 of a shaft interface 211 according to an exemplary embodiment of the invention. In Fig. 3 an area of the connecting element 331 is illustrated which indicates the area where the connecting element 221 is attached to the shaft 203 and the shaft interface 211. Further, an outer surface 330 of the shaft is illustrated. The connecting element 221 extends along a part of the outer surface 330 of the shaft 203. As can be seen, the shaft interface 211 is a so called front bracket, which receives the shaft 203. The shaft 203 comprises a circular shape. Also the through opening 216 comprises a circular shape. When the shaft 203 is connected with the shaft interface 211, a rear end surface 220 of the shaft 203, which extends in a plane perpendicular to a shaft extension direction, and the rear surface 213 of the shaft interface 211 are arranged in a same plane. The connecting element 221 is arranged at the rear end surface 220 of the shaft 203 and the rear surface 213 of the shaft interface 211.

Fig. 4 illustrates a side view of a shaft 203 connected to a shaft interface 211 according to an exemplary embodiment of the invention. The shaft 203 comprising the collar 217 is arranged in the shaft interface 211, wherein the rear end surface 220 of the shaft 203 and the rear surface 213 of the shaft interface 211 extend in the same plane. The connecting element 221 is arranged at the rear surface 213 of the shaft interface 211 and connects it with the rear end surface 220 of the shaft 203. The further connecting element 222 is arranged at the front surface 212 of the shaft interface and connects it with the shaft 203 at the surface of the collar 217 which faces the shaft interface 211.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 100: toothbrush
- 101: drive train
- 102: brush head
- 103,203: shaft
- 104: torque
- 105: first spring
- 106: second spring
- 107: third spring
- 108: frame
- 109: actuator
- 110: torque
- 211: shaft interface
- 212: front surface of shaft interface
- 213: rear surface of shaft interface
- 214: tapering
- 215: interface chamfer
- 216: through opening
- 217: collar
- 218: rear side of the shaft
- 219: shaft chamfer
- 220: rear end surface of the shaft
- 221: connecting element
- 222: further connecting element
- 330: outer surface of shaft
- 331: area of connecting element
- A: center axis of shaft

## Claims

1. A drive train assembly for an electric toothbrush, comprising
a shaft comprising a rear side and a front side, wherein the front side of the shaft is configured for receiving a brush head,
a drive train comprising a shaft interface configured to receive the shaft, wherein the shaft interface comprises a rear surface and a front surface, wherein the rear side of the shaft is connected with the shaft interface from the direction of the front surface of the shaft interface for connecting with the drive train,
a connecting element configured for connecting the shaft with the shaft interface,
wherein the connecting element extends at least partially along the outer surface at the rear side of the shaft for connecting the shaft interface and the shaft at the rear side of the shaft.

2. The drive train assembly according to claim 1,
wherein the connecting element extends along the entire outer surface of the shaft at the rear side of the shaft and connects the outer surface of the shaft with the shaft interface.

3. The drive train assembly according to claim 1 or 2,
wherein the connecting element is configured to connect a first portion of the rear side of the shaft and the rear surface of the shaft interface.

4. The drive train assembly according to any of the preceding claims,
further comprising a further connecting element configured to connect a second portion of the rear side of the shaft and the front surface of the shaft interface.

5. The drive train assembly according to any of the preceding claims,
wherein the shaft further comprises a collar extending into a direction away from a shaft center axis and extending along the outer surface of the rear side of the shaft,
wherein the collar is in contact with the front surface of the shaft interface.

6. The drive train assembly according to claim 4 and 5,
wherein the further connecting element is arranged between the collar of the shaft and the front surface of the shaft interface.

7. The drive train assembly according to any of the preceding claims,
wherein the shaft interface comprises a through opening, wherein the rear side of the shaft is inserted into the through opening for forming a connection between the shaft and the shaft interface.

8. The drive train assembly according to any of the preceding claims,
wherein when the shaft is connected with the shaft interface, a rear end surface of the shaft, which extends in a plane perpendicular to a shaft extension direction, and the rear surface of the shaft interface are arranged in a same plane,
wherein the connecting element is arranged at the rear end surface of the shaft and the rear surface of the shaft interface.

9. The drive train assembly according to any of the preceding claims,
wherein the shaft comprises a shaft chamfer extending along the rear end surface of the shaft,
wherein the connecting element is arranged at the shaft chamfer and connects the rear surface of the shaft interface and the rear end side of the shaft.

10. The drive train assembly according to any of the preceding claims,
wherein an inner wall of the through opening of the shaft interface comprises a straight shape, or
wherein the inner wall of the through opening of the shaft interface tapers from the rear surface of the shaft interface to the front surface of the shaft interface such that an undercut inside the through opening is formed.

11. The drive train assembly according to claim 10,
wherein the shaft interface comprises an interface chamfer extending along one side of the through opening arranged on the front surface of the shaft interface.

12. The drive train assembly according to any of the preceding claims,
wherein the connection element and/or the further connecting element is a welding seam applied by laser welding.

13. An electric toothbrush, comprising
a drive train assembly according to any of the preceding claims,
a brush head connected to the drive train via the shaft of the drive train assembly.

14. A method for manufacturing a drive train assembly for an electric toothbrush, the method comprising the steps of
providing a shaft interface,
providing a shaft,
providing a through opening to the shaft interface,
inserting the shaft into the through opening of the shaft interface,
connecting the shaft on a rear shaft side to the shaft interface by a connecting element,
wherein the connecting element extends at least partially along the outer surface of the rear shaft side for connecting the shaft interface and the rear shaft side of the shaft.

15. The method according to claim 14,
wherein the connecting step comprises welding of the connecting element for connecting the rear shaft side to the shaft interface.
